# EUROPÄISCHE PATENTSCHRIFT

(11) **EP 3 966 055 B1**
(45) Veröffentlichungstag und Bekanntmachung des Hinweises auf die Patenterteilung: **04.10.2023**
(21) Anmeldenummer: 20724771.9
(22) Anmeldetag: 04.05.2020
(51) Int. Cl.: B60H 1/00

(54) **LUFTKANALEINRICHTUNG UND KRAFTFAHRZEUG**
AIR DUCT DEVICE AND MOTOR VEHICLE
DISPOSITIF DE CANAL D'AIR ET VÉHICULE À MOTEUR

(30) Priorität: 10.05.2019 DE 102019206852
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: OSTWALD, Stefan, 31185 Söhlde (Hoheneggelsen) (DE)
(74) Vertreter: Clarenbach, Carl-Philipp
(86) Internationale Anmeldenummer: PCT/EP2020/062263
(87) Internationale Veröffentlichungsnummer: WO 2020/229211

(56) Entgegenhaltungen:
- EP-A1- 1 334 864
- DE-A1-102006 021 386
- US-A1- 2015 011 146
- US-A1- 2015 210 054

## Beschreibung

Die Erfindung betrifft eine Luftkanaleinrichtung für ein Fahrzeug, insbesondere Kraftfahrzeug, mit einem rohrförmigen, einen zumindest längsabschnittsweise im Querschnitt geschlossene Mantelwand aufweisenden Luftkanal, und mit zumindest einem dem Luftkanal zugeordneten, elastisch verformbaren Rastmittel.

Weiterhin betrifft die Erfindung ein Kraftfahrzeug mit der vorstehend beschriebenen Luftkanalein richtung.

Luftkanaleinrichtungen der eingangs genannten Art sind aus dem Stand der Technik bereits bekannt. So offenbart beispielsweise die Gebrauchsmusterschrift DE 90 16 703 U1 eine Luftkanaleinrichtung mit mehreren rohrförmigen Luftkanälen, die jeweils eine im Querschnitt geschlossene Mantelwand aufweisen. An zumindest einem der Luftkanäle ist einstückig an die Mantelwand ein Rastmittel angebracht, das ein Verrasten des Rohres an einer Halterung oder dergleichen ermöglichen soll.

Aus der Offenlegungsschrift DE 198 52 123 A1 ist außerdem ein polymeres Formteil bekannt, dass durch die Anwendung einer Gasinjektionstechnik Hohlräume aufweist, welche dazu dienen, Gase und Flüssigkeiten zu leiten. Aus der Offenlegungsschrift DE 93 14 178 U1 ist außerdem eine Luftklappe bekannt, mit einem Grundkörper und einer an den Grundkörper angespitzten elastischen Dichtungsleiste, wobei die Dichtungsleiste zumindest einen, in ihrer Erstreckungsrichtung verlaufenden, nach dem Gasinjektionsverfahren hergestellten Hohlkörper aufweist.

Aus der Offenlegungsschrift EP 1 334 864 A1 ist eine Luftkanaleinrichtung mit einem mehrteiligen Luftkanal bekannt, dessen Kanalelemente durch Rastmittel aneinander gehalten sind. Auch aus den Offenlegungsschriften US 2015/0011146 A1, US 2015/0210054 A1 und DE 10 2006 021 386 A1 sind Luftkanaleinrichtungen bekannt, die einen mehrteiligen Luftkanal aufweisen.

Der Erfindung liegt die Aufgabe zugrunde, eine Luftkanaleinrichtung zu schaffen, die eine einfache Montage sowie eine lange Haltbarkeit gewährleistet.

Die der Erfindung zugrundeliegende Aufgabe wird durch eine Luftkanaleinrichtung mit den Merkmalen des Anspruchs 1 gelöst. Die erfindungsgemäße Luftkanaleinrichtung hat den Vorteil, dass die Montage insbesondere im Kraftfahrzeug erleichtert wird, und darüber hinaus eine bauraumsparende Integration des Luftkanals in das Kraftfahrzeug gewährleistet wird. Darüber hinaus gewährleistet die erfindungsgemäße Luftkanaleinrichtung eine dauerhafte und sichere Luftführung, die insbesondere ein Austreten der Luft radial aus dem Luftkanal sicher vermeidet. Erfindungsgemäß ist hierzu vorgesehen, dass der Luftkanal im Querschnitt zumindest zweiteilig ausgebildet ist und dazu ein unerwünschtes erstes Kanalelement und ein zweites Kanalelement aufweist, die durch das zumindest eine Rastmittel derart dichtend aneinandergehalten sind, dass sie die geschlossene Mantelwand des Luftkanals zusammen ausbilden. Durch die zweiteilige Ausbildung des Luftkanals im Querschnitt ergibt sich, dass der Luftkanal im Querschnitt keine durchgehend einstückige Mantelwand aufweist, sondern eine geteilte Mantelwand, die durch die zumindest zwei Kanalelemente ausgebildet wird. Die einzelnen Kanalelemente können somit besonders kostengünstig realisiert werden, weil auf das Herstellen eines Hohlkörpers für den Luftkanal selbst verzichtet werden kann. Dadurch ergibt sich eine kostengünstige und einfache Konstruktion und Herstellung der Luftkanaleinrichtung. Durch das zumindest eine Rastmittel wird erreicht, dass die Kanalelemente im zusammengesetzten Zustand dicht aneinandergehalten sind, sodass die Mantelwand im Umfang gesehen dauerhaft geschlossen beziehungsweise dicht geschlossen bleibt und andererseits eine einfache Montage der Kanalelemente aneinander ermöglicht ist. Durch das zumindest eine Rastmittel verrasten die Kanalelemente miteinander, sodass zusätzliche Verbindungselemente und/oder Vorkehrungen nicht notwendig sind und die Montage des Luftkanals besonders einfach erfolgt.

Erfindungsgemäß weist zumindest eines der Kanalelemente eine Aufnahmevertiefung auf, in welche ein Verbindungsvorsprung des anderen der Kanalelemente eingesteckt ist. Durch den in die Aufnahmevertiefung eingesteckten Verbindungsvorsprung wird eine dichte Verbindung der Kanalelemente aneinander auf einfache Art und Weise gewährleistet, um die geschlossene Mantelwand auszubilden. Der Verbindungsvorsprung, der in die Aufnahmevertiefung eingesteckt ist, ermöglicht, dass eine Labyrinth-Dichtung an beiden Längsaußenseiten des Verbindungsvorsprungs durch das dichtende Anliegen beidseitig in der Aufnahmevertiefung hergestellt ist. Dadurch ist eine besonders dichte Ausführung des Luftkanals gewährleistet. Darüber hinaus erlaubt der in die Aufnahmevertiefung einzusteckende Verbindungsvorsprung eine einfache Ausrichtung und Zuordnung der Kanalelemente bei der Montage. Vorzugsweise sind Verbindungsvorsprung und/oder Aufnahmevertiefung derart ausgebildet, dass sie als Zentriermittel zur Ausrichtung der Kanalelemente zueinander dienen, wodurch ein vorteilhaftes Fügen der Kanalelemente miteinander gewährleistet ist.

Weiterhin ist erfindungsgemäß vorgesehen, dass das erste und/oder das zweite Kanalelement im Querschnitt jeweils eine Bodenwand und zwei beabstandet zueinander von der Bodenwand vorstehende Seitenwände aufweist, wobei jede der Seitenwände an ihrer freien Stirnseite entweder eine Aufnahmevertiefung oder einen Verbindungsvorsprung aufweist. Dadurch werden die Kanalelemente in vorteilhafter Weise an ihren Seitenwänden miteinander gefügt, indem der jeweilige Verbindungsvorsprung in eine ihm zugeordnete Aufnahmevertiefung des gegenüberliegenden Kanalelements eingesteckt wird. Durch die Ausbildung von Aufnahmevertiefung und/oder Verbindungsvorsprung in den freien Stirnseiten ist eine einfache werkzeugfallende Ausführung der Kanalelemente sowie eine vorteilhafte Ausgestaltung des Luftkanals selbst geboten, weil insbesondere die Verbindungselemente nicht in den Luftkanal hineinragen und dadurch nicht die Luftströmung durch den Luftkanal beeinflussen. Vielmehr sind die Kanalelemente derart ausgebildet, dass im zusammengesetzten Zustand der Innenraum des Luftkanals eine durchgehende Innenwand ohne radial nach innen vorstehende Vorsprünge aufweist, sodass Turbulenzen und Strömungswiderstände in dem Luftkanal vermieden werden.

Vorzugsweise weisen die Seitenwände jeweils eine Aufnahmevertiefung zur Aufnahme zumindest eines Verbindungsvorsprungs einer Seitenwand des gegenüberliegenden Kanalelements auf. Damit ist jede Seitenwand mit einer Aufnahmevertiefung versehen, wodurch eine vorteilhafte Austauschbarkeit von den Kanalelementen gegeben ist. Dadurch, dass beide Seitenwände jeweils eine Aufnahmevertiefung aufweisen, ergibt sich darüber hinaus eine erhöhte Dichtwirkung zwischen den Kanalelementen aufgrund der dadurch erzeugten mehreren Dichtstellen zwischen den Kanalelementen, wie vorstehend bereits beschrieben. Insbesondere wird hierdurch eine Nut-Feder-Verbindung realisiert, die eine hohe mechanische Festigkeit sowie eine vorteilhafte Dichtwirkung für den Luftkanal bietet.

Erfindungsgemäß sind die Seitenwände zumindest eines der Kanalelemente jeweils gabelförmig mit zwei zumindest im Wesentlichen parallel zueinander angerichteten Verbindungsvorsprüngen ausgebildet, wobei die jeweils zwei Verbindungsvorsprünge zwischen sich jeweils eine Aufnahmevertiefung ausbilden. Gemäß dieser Ausführungsform verzweigen die Seitenwände somit gabelförmig in jeweils zwei Verbindungsvorsprünge, die zwischen sich wiederum eine Aufnahmevertiefung für den Verbindungsvorsprung eines gegenüberliegend angeordneten Kanalelements ausbilden. Durch diese Ausführungsform wird in einfacher Art und Weise erreicht, dass jedes Kanalelement an seinen Stirnseiten sowohl Aufnahmevertiefungen als auch Verbindungsvorsprünge aufweist, wobei die Seitenwände der Kanalelemente komplementär derart zueinander ausgebildet sind, dass ein einfaches Zusammenstecken beziehungsweise Einstecken jeweils eines Verbindungsvorsprungs in jeweils eine der gegenüberliegenden Aufnahmevertiefungen gewährleistet ist. Hierdurch wird unter anderem auch die Robustheit der Luftkanaleinrichtung durch eine vorteilhafte mechanische Verbindung erhöht.

Weiterhin ist erfindungsgemäß vorgesehen, dass zumindest einer der Verbindungsvorsprünge eine seitlich vorstehende Rastnase aufweist, und dass ein diesem Verbindungsvorsprung zugeordneter Verbindungsvorsprung des gegenüberliegenden Kanalelements eine mit der Rastnase zusammenwirkende Rastaussparung aufweist, wobei Rastnase und Rastaussparung zusammen zumindest ein Rastmittel bilden. Das Rastmittel ist somit im Bereich der Seitenwände angeordnet beziehungsweise ausgebildet und erlaubt ein direktes Verrasten von dem ersten Kanalelement an dem zweiten Kanalelement. Durch die seitlich vorstehende Rastnase und die Rastaussparung im gegenüberliegenden Kanalelement wird erreicht, dass unter elastischer Verformung die beiden Kanalelemente miteinander fügbar sind, bis die Rastnase in die Rastaussparung gelangt, und dadurch das gegenüberliegende Kanalelement hintergreift und eine formschlüssige Arretierung der Kanalelemente aneinander gewährleistet. Dadurch wird eine vorteilhafte einfache Montage geboten, die ein ungewolltes Lösen der Kanalelemente voneinander sicher verhindert.

Vorzugsweise sind Rastnase und Rastvorsprung an einer Außenseite des Luftkanals ausgebildet angeordnet, sodass, wie vorstehend bereits erwähnt, der Innenraum des Luftkanals frei von Vorsprüngen oder Strömungswiderständen ist. Darüber hinaus bietet die außenseitige Anordnung den Vorteil, dass die Kanalelemente bei Bedarf durch das Lösen der Verrastung auch einfach voneinander gelöst werden können.

Gemäß einer bevorzugten Weiterbildung der Erfindung weist zumindest eines der Kanalelemente in einem Verzweigungsbereich von zumindest einer der Seitenwände in die zugehörigen Verbindungsvorsprünge einen Fluidinjektionsinnendruckkanal, insbesondere Gasinjektionsinnendruckkanal, auf, der sich insbesondere parallel zu dem Luftkanal erstreckt. Durch die Ausbildung der Seitenwände mit jeweils zwei Verbindungsvorsprüngen ergibt sich ein Verzweigungsbereich, in welchem die Seitenwand von einer einarmigen Ausbildung in eine zweiarmige Ausbildung übergeht. In diesem Verzweigungsbereich ist nun der vorteilhafte Fluidinjektionsinnendruckkanal vorgesehen, der gewährleistet, dass bei der Herstellung der Kanalelemente Einfallstellen vermieden werden, die zu einem Verzug oder einer möglichen Positions-/Formungenauigkeit führen könnten. Insbesondere wird das jeweilige Kanalelement als Spritzgussteil aus Kunststoff gefertigt. Beim Abkühlen des Kunststoffmaterials findet ein Schwindungsprozess statt, bei welchem Einfallstellen theoretisch auftreten könnten. Durch das Vorsehen des vorteilhaften Fluidinjektionsinnendruckkanals in dem jeweiligen Verzweigungsbereich wird gewährleistet, dass diese Einfallstellen in dem kritischen Bereich nicht auftreten, sodass verzugsarme und formstabile Kanalelemente zur Verfügung stehen, welche die vorteilhafte Dichtung und Ausrichtung der Kanäle zueinander gewährleisten.

Weiterhin weist jedes Kanalelement bevorzugt in jedem Verzweigungsbereich jeweils einen Fluidinjektionsinnendruckkanal, insbesondere Gasinjektionsinnendruckkanal, auf. Dadurch ist gewährleistet, dass die Kanalelemente an allen kritischen Stellen vorteilhaft vor Verzug geschützt sind, wie vorstehend beschrieben.

Besonders bevorzugt weisen die Verbindungsvorsprünge und/oder Aufnahmevertiefungen jeweils ein keilförmiges Ende zur dichten Anlage an dem gegenüberliegenden Kanalelement auf. Durch das keilförmige Ende wird zum einen eine Zentrierfunktion realisiert, und zum anderen eine flächige Anlage an dem jeweils anderen Kanalelement gewährleistet, wodurch der Vorteil einer hohen Dichtwirkung erzielt wird.

Weiterhin ist bevorzugt vorgesehen, dass das erste Kanalelement oder das zweite Kanalelement als Trägerelement einer Instrumententafel eines Kraftfahrzeugs ausgebildet ist. Dadurch ist der Luftkanal zumindest teilweise in andere Komponenten des Kraftfahrzeugs integriert. So wird der Luftkanal erst durch das Zufügen des weiteren Kanalelements vervollständigt, wodurch eine einfache Montage und Integration des Luftkanals insbesondere in eine Instrumententafel gewährleistet ist.

Das erfindungsgemäße Kraftfahrzeug mit den Merkmalen des Anspruchs 12 zeichnet sich durch zumindest eine erfindungsgemäße Luftkanaleinrichtung aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: ein vorteilhaftes Ausführungsbeispiel einer vorteilhaften Luftkanaleinrichtung in einer perspektivischen Darstellung,
- Figur 2: eine Querschnittsdarstellung eines Luftkanals der Luftkanaleinrichtung,
- Figur 3: eine Seitenansicht der Luftkanaleinrichtung und
- Figur 4: ein weiteres Ausführungsbeispiel der Luftkanaleinrichtung in einer Querschnittsdarstellung des Luftkanals.

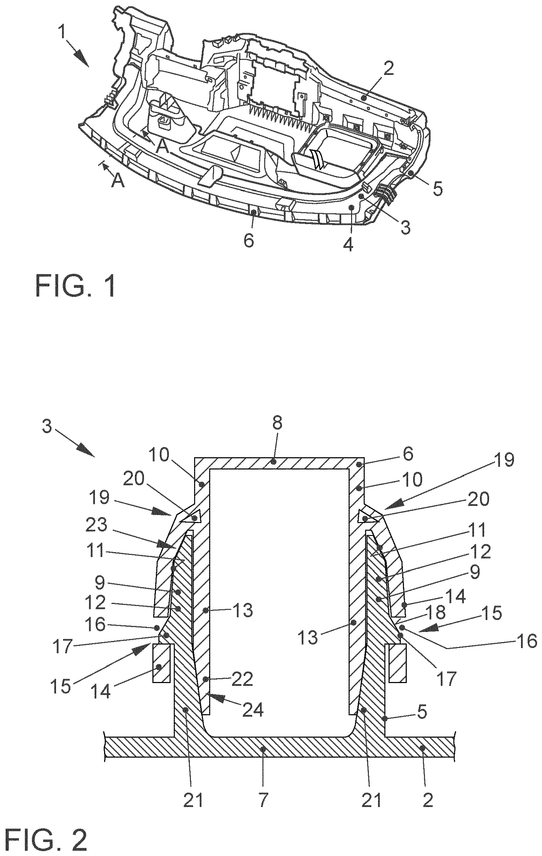

Figur 1 zeigt in einer vereinfachten perspektivischen Darstellung eine Luftkanaleinrichtung 1 für ein hier nicht näher dargestelltes Kraftfahrzeug. Die Luftkanaleinrichtung 1 weist ein Trägerelement 2 für eine Instrumententafel des Kraftfahrzeugs auf. An dem Trägerelement 2 ist ein Luftkanal 3 angeordnet, der beispielsweise einen von einer Belüftungseinrichtung oder Klimatisierungseinrichtung bereitgestellten Luftstrom gezielt in den Innenraum des Kraftfahrzeugs oder zu Ausströmern im Bereich der Instrumententafel führt. Der Luftkanal 3 ist röhrenförmig ausgebildet und weist dazu zumindest längsabschnittsweise eine im Querschnitt geschlossene Mantelwand auf, die gegebenenfalls nur abschnittsweise in Längserstreckung des Luftkanals 3 gesehen durch Zuluft- und Abluftöffnungen durchbrochen ist. Die Mantelwand 4 weist im Querschnitt insbesondere einen im vorliegenden Ausführungsbeispiel rechteckförmigen Querschnitt auf, sodass sich ein rechteckförmiger Innenraum ergibt, welcher zur Luftleitung dient.

Der Luftkanal 3 ist dabei zweiteilig ausgebildet. Das Trägerelement 2 bildet dazu ein erstes Kanalelement 5, auf welchem ein zweites Kanalelement 6, das separat zu dem Trägerelement 2 ausgebildet und insbesondere lösbar an diesem befestigt ist, auf. Die Kanalelemente erstrecken sich dabei beide in Längserstreckung des Luftkanals 3, sodass der Luftkanal 3 im Querschnitt gesehen zweigeteilt ist, wie im Folgenden näher erörtert wird.

Figur 2 zeigt dazu eine vereinfachte Schnittdarstellung durch den Luftkanal 3 der Luftkanaleinrichtung 1 gemäß der in Figur 1 eingezeichneten gestrichelten Linie A-A. Beide Kanalelemente 5, 6 weisen einen becherförmigen Querschnitt auf. Dazu weist jedes der Kanalelemente 5, 6 eine Bodenwand 7 beziehungsweise 8 sowie zwei von der jeweiligen Bodenwand 7, 8 vorstehende und beabstandet zueinander angeordnete Seitenwände 9 beziehungsweise 10 auf. Die Seitenwände 9, 10 stehen dabei jeweils von der gleichen Seite der zugehörigen Bodenwand 7, 8 vor, sodass sich die bereits genannte Becherform im Querschnitt der Kanalelemente 5, 6 ergibt.

Gemäß dem vorliegenden Ausführungsbeispiel weist das zweite Kanalelement 8 eine in der freien Stirnseite der jeweiligen Seitenwand 10 ausgebildete Aufnahmevertiefung 11 auf. Im Boden- beziehungsweise Endbereich der jeweiligen Aufnahmevertiefung 11 ist die jeweilige Aufnahmevertiefung 11 keilförmig ausgebildet. Die Aufnahmevertiefungen 11 dienen zur Aufnahme der Seitenwände 9 des gegenüberliegenden Kanalelements 5, sodass die Seitenwände 9 des Kanalelements 5 zumindest endseitig einen Verbindungsvorsprung 12 bilden, der in die jeweilige Aufnahmevertiefung 11 einsteckbar beziehungsweise eingesteckt ist. Vorzugsweise, wie in Figur 2 gezeigt, weisen die Verbindungsvorsprünge 12 an ihrem freien, in die jeweilige Aufnahmevertiefung 11 eingesteckten Ende ebenfalls eine Keilform auf, um einen vorteilhaften dichtenden Anlagekontakt der Seitenwände 9 und 10 aneinander zu gewährleisten. Insbesondere ist die Breite des jeweiligen Verbindungsvorsprungs 12 zumindest abschnittsweise geringfügig größer als die lichte Weite der Aufnahmevertiefung, im keilförmigen Bereich, sodass durch das Einstecken der Verbindungsvorsprünge 12 in die jeweilige Aufnahmevertiefung 11 eine Presspassung an den Kontaktflächen realisiert ist.

Die Aufnahmevertiefung 11 des Kanalelements 6 wird dadurch gebildet, dass geometrisch die Seitenwände 10 abschnittsweise in zwei zumindest im Wesentlichen parallel zueinander ausgerichtete Verbindungsvorsprünge 13, 14 verzweigt, wobei die Aufnahmevertiefung 11 zwischen den jeweiligen Verbindungsvorsprüngen 13, 14 ausgebildet ist. Der jeweils innenliegende Verbindungsvorsprung 13 bildet dabei eine Innenwand des Luftkanals 3 und der jeweils außenliegende Verbindungsprung 14 ein Rastmittel 15 zum Verrasten des Kanalelements 6 an dem Kanalelement 5.

Der außenliegende Verbindungsvorsprung 14 weist dazu eine Rastaussparung 16 in Form eines Durchbruchs oder einer der Aufnahmevertiefung 11 zugewandten Vertiefung auf. Die Seitenwände 9 des gegenüberliegenden Kanalelements 5, beziehungsweise die Verbindungsvorsprünge 12 weisen jeweils eine mit der Rastaussparung zusammenwirkende Rastnase 17 auf. Die Rastnasen 17 stehen jeweils nach außen, also in Richtung des außenliegenden Verbindungsvorsprungs 14 vor. Dabei weisen die Rastnasen 17 eine schräge Anlauffläche 18 auf, die beim Einstecken gegen die Stirnseite des Verbindungsvorsprungs 14 trifft und diesen unter elastischer Verformung insbesondere des Verbindungsvorsprungs 14 nach außen drängt, bis sie in die Rastaussparung 16 einschnappt und dadurch die Kanalelemente 5 und 6 aneinander arretiert.

In dem Verzweigungsbereich 19, in welchem die Seitenwand 10 in die zwei Verbindungsvorsprünge 13, 14 gabelförmig aufgeteilt wird, ist jeweils ein Fluidinjektionsinnendruckkanal 20 ausgebildet, also ein Hohlraum, der durch ein Fluidinjektionsinnendruckverfahren, oder alternativ durch ein Flüssigkeitsinjektionsinnendruckverfahren, hergestellt wurde, ausgebildet. Der Fluidinjektionsinnendruckkanal 20 erstreckt sich parallel zu dem Luftkanal 3 beziehungsweise in dessen Längserstreckung in dem Verzweigungsbereich 19. Gemäß dem vorliegenden Ausführungsbeispiel ist er dabei dreieckförmig ausgebildet, sodass das ihn im Querschnitt umgebende Material des Kanalelements 6 über den gesamten Umfang des Gasinjektionsinnendruckkanals 20 nahezu die gleiche Stärke aufweist, wie in Figur 2 gezeigt. Vorzugsweise erstrecken sich die Verbindungsvorsprünge 13 senkrecht zu der Bodenwand 8, während die Verbindungsvorsprünge 14 von der Seitenwand 10 beziehungsweise dem Verzweigungsbereich 19 zunächst schräg nach außen und dann im Wesentlichen parallel zu dem Verbindungsvorsprung 13 geführt werden.

Durch den Fluidinjektionsinnendruckkanal 20 wird gewährleistet, dass in dem Bereich hoher Spannungen, der auch für eine sichere dichtende Anlage der Kanalelemente 5, 6 aneinander präzise und dauerhaft belastbar sein soll, das Auftreten von Einfallstellen und damit einhergehender Verzug des Kanalelements 6 vermieden werden. Dadurch wird die Positionsgenauigkeit und Formungsgenauigkeit des Kanalelements 6 optimiert, um ein positionsgenaues Verrasten der Kanalelemente 5, 6 miteinander unter Erreichen der gewünschten Dichtwirkung zu erzielen.

Vorzugsweise weisen die Verbindungsvorsprünge 9 außerdem an ihrem der Bodenwand 7 zugewandten Ende einen sich nach innen verbreiternden Abschnitt 21 auf, der mit einem keilförmig ausgebildeten Ende 22 des jeweiligen Verbindungsvorsprungs 13 derart zusammenwirkt, dass im verrasteten Zustand das Ende 22 flächig an dem Endabschnitt 21 anliegt.

Durch die vorteilhafte Ausbildung des Luftkanals 3 wird zum einen eine einfache Montage des Luftkanals 3 geboten und zum anderen eine hohe Lebensdauer und Dichtwirkung des Luftkanals 3 gewährleistet. Insbesondere wird gemäß dem vorliegenden Ausführungsbeispiel erreicht, dass zwei Dichtbereiche 23 und 24 zwischen den jeweils einander gegenüberliegenden Seitenwänden 10, 9 entstehen, einer im Bereich des keilförmigen Endes des Verbindungsvorsprungs 11 und einer im Endbereich 21.

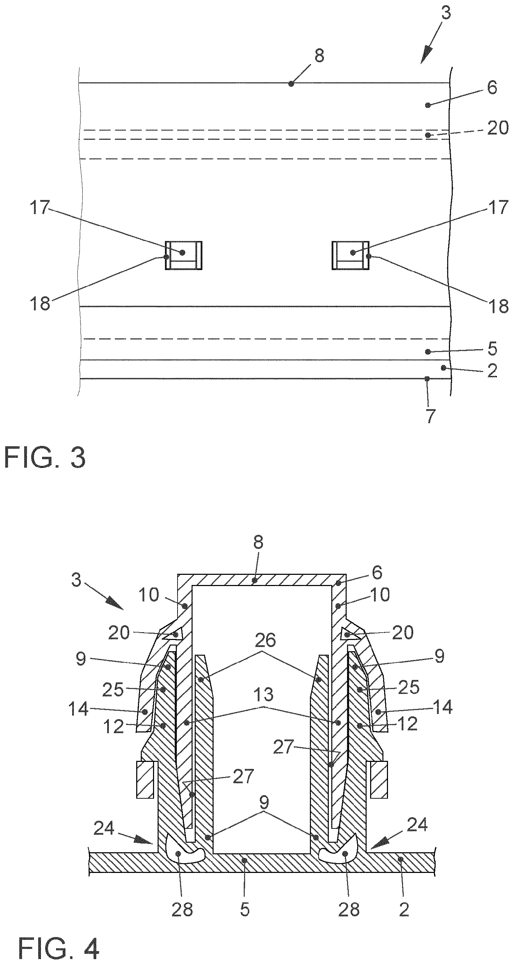

Figur 3 zeigt in einer vereinfachten Seitenansicht den Luftkanal 3 gemäß dem Ausführungsbeispiel von Figur 2. Vorzugsweise sind in Längserstreckung der Seitenwände 9 gesehen mehrere beabstandet zueinander ausgebildete Rastnasen 17 angeordnet, die in entsprechend beabstandet zueinander angeordnete Rastaussparungen 16 eingreifen. Vorzugsweise sind eine Vielzahl von Rastnasen 17 und damit zusammenwirkenden Rastaussparungen 16 in Längserstreckung des Luftkanals 3, insbesondere beidseitig beziehungsweise an beiden Seitenwänden der Kanalelemente 5, 6 ausgebildet, um eine sichere und dichtende Arretierung der Kanalelemente 5, 6 entlang der Längserstreckung des Luftkanals 3 zu gewährleisten.

Figur 4 zeigt ein weiteres Ausführungsbeispiel des Luftkanals 3 in einer weiteren Querschnittsdarstellung. Aus dem vorhergehenden Ausführungsbeispiel beschriebene Elemente sind mit dem gleichen Bezugszeichen versehen, sodass insofern auf die obenstehende Beschreibung verwiesen wird. Im Folgenden soll im Wesentlichen nur auf die Unterschiede eingegangen werden.

Im Unterschied zu dem vorhergehenden Ausführungsbeispiel weisen nunmehr auch die Seitenwände 9 des Kanalelements 5 eine gabelförmige Verzweigung in zwei zumindest im Wesentlichen parallel zueinander ausgebildete Verbindungsvorsprünge 25 und 26 auf. Zwischen den jeweiligen Verbindungsvorsprüngen 25, 26 ist eine weitere Aufnahmevertiefung 27 ausgebildet, die derart komplementär zu den Verbindungsvorsprüngen 13 des Kanalelements 6 ausgebildet sind, dass die Verbindungsvorsprünge 13 in die Aufnahmevertiefungen 27 eingesteckt sind. Dadurch wird die Dichtwirkung sowie die mechanische Halterung zwischen den Kanalelementen 5, 6 weiter erhöht.

Vorteilhafterweise ist in Verzweigungsbereichen 24 jeweils ein Fluidinjektionsinnendruckkanal 28 ausgebildet, der sich parallel zum Luftkanal 8 beziehungsweise in dessen Längserstreckung erstreckt, um auch hier die zu den Fluidinjektionsinnendruckkanälen 20 bereits genannten Vorteile zu erreichen.

Durch die vorteilhaften Ausführungsbeispiele des Luftkanals 3 wird erreicht, dass aufgrund einer vorteilhaften Feder-Nut-Verbindung, welche durch die Verbindungsvorsprünge 12, 13, 14, 25 und 26 und die dadurch gebildeten Aufnahmevertiefungen 11 und 27 erreicht wird, eine hohe Dichtwirkung beziehungsweise eine vorteilhaft geschlossene Ausbildung der Mantelwand 4 im Querschnitt gesehen sowie ein einfaches Montieren und dauerhaftes Befestigen der Kanalelemente 5, 6 aneinander gewährleistet wird.

### Bezugszeichenliste

- 1: Luftkanaleinrichtung
- 2: Trägerelement
- 3: Luftkanal
- 4: Mantelwand
- 5: Kanalelement
- 6: Kanalelement
- 7: Bodenwand
- 8: Bodenwand
- 9: Seitenwand
- 10: Seitenwand
- 11: Aufnahmevertiefung
- 12: Verbindungsvorsprung
- 13: Verbindungsvorsprung
- 14: Verbindungsvorsprung
- 15: Rastmittel
- 16: Rastaussparung
- 17: Rastnase
- 18: Anlauffläche
- 19: Verzweigungsbereich
- 20: Gasinjektionsinnendruckkanal
- 21: Endabschnitt
- 22: Ende
- 23: Dichtbereich
- 24: Dichtbereich
- 25: Verbindungsvorsprung
- 26: Verbindungsvorsprung
- 27: Aufnahmevertiefung
- 28: Gasinjektionsinnendruckkanal

## Patentansprüche

1. Luftkanaleinrichtung (1) für ein Fahrzeug, insbesondere Kraftfahrzeug, mit einem rohrförmigen, einen im Querschnitt geschlossene Mantelwand (4) aufweisenden Luftkanal (3), und mit zumindest einem dem Luftkanal (3) zugeordneten, elastisch verformbaren Rastmittel (15), wobei der Luftkanal (3) im Querschnitt zumindest zweiteilig ausgebildet ist und dazu ein erstes Kanalelement (5) und ein zweites Kanalelement (6) aufweist, die durch das zumindest eine Rastmittel (15) derart dichtend aneinander gehalten sind, dass sie die geschlossene Mantelwand (4) des Luftkanals (3) zusammen ausbilden, **dadurch gekennzeichnet, dass** das erste und das zweite Kanalelement (5, 6) im Querschnitt jeweils eine Bodenwand (7, 8) und zwei beabstandet zueinander von der Bodenwand (7, 8) vorstehende Seitenwände (9, 10) aufweist, wobei jede der Seitenwände (9,10) an ihrer freien Stirnseite entweder eine Aufnahmevertiefung (11, 27) oder einen Verbindungsvorsprung (12 - 14, 25, 26) aufweist, dass die Seitenwände (9, 10) zumindest eines der Kanalelemente (5, 6) jeweils gabelförmig mit zwei zumindest im Wesentlichen parallel zueinander ausgerichteten Verbindungsvorsprüngen (13, 14; 25, 26) ausgebildet sind, wobei die jeweils zwei Verbindungsvorsprünge (13, 14; 25, 26) zwischen sich jeweils eine Aufnahmevertiefung (11, 27) zur Aufnahme zumindest eines Verbindungsvorsprungs (13, 14, 25, 26) einer Seitenwand (9, 10) des gegenüberliegenden Kanalelements (5, 6) ausbilden, und dass zumindest einer der Verbindungsvorsprünge (12) eine seitlich vorstehende Rastnase (17) aufweist, und dass ein diesem Verbindungsvorsprung (12) zugeordneter Verbindungsvorsprung (14) des gegenüberliegenden Kanalelements eine mit der Rastnase (17) zusammenwirkende Rastaussparung (16) aufweist, die zusammen das zumindest eine Rastmittel (15) bilden.

2. Luftkanaleinrichtung nach Anspruch 1, **dadurch gekennzeichnet, dass** die Rastnase (17) und die Rastaussparung (16) an einer Außenseite des Luftkanals ausgebildet oder angeordnet sind.

3. Luftkanaleinrichtung nach einem der vorhergehenden Ansprüche, **dadurch gekennzeichnet, dass** zumindest eines der Kanalelemente (5,6) in einem Verzweigungsbereich (19,24) von zumindest einer der Seitenwände (10,11) in die zugehörige Verbindungsvorsprünge (13,14;25,26) einen Fluidinjektionsinnendruckkanal (20,28) aufweist, der sich parallel zu dem Luftkanal (3) erstreckt.

4. Luftkanaleinrichtung nach einem der vorhergehenden Ansprüche, **dadurch gekennzeichnet, dass** jedes Kanalelement (5,6) in jedem dem Verzweigungsbereiche (19,24) jeweils einen Fluidinjektionsinnendruckkanal (20,28) aufweist.

5. Luftkanaleinrichtung nach einem der vorhergehenden Ansprüche, **dadurch gekennzeichnet, dass** zumindest ein Verbindungsvorsprung (12,25) und/oder zumindest eine Aufnahmevertiefung (11,27) jeweils ein keilförmiges Ende zur dichten Anlage an dem gegenüberliegenden Kanalelement (6,5) aufweist.

6. Luftkanaleinrichtung nach einem der vorhergehenden Ansprüche, **dadurch gekennzeichnet, dass** das erste Kanalelement (5) oder das zweite Kanalelement (6) als Trägerelement (2) einer Instrumententafel eines Kraftfahrzeugs ausgebildet ist.

7. Kraftfahrzeug mit zumindest einer Luftkanaleinrichtung (1) gemäß einem der Ansprüche 1 bis 6.

## Claims

1. An air duct apparatus (1) for a vehicle, in particular a motor vehicle, with a tubular air duct (3) having a closed jacket wall (4) in cross-section, and with at least one elastically deformable latching means (15) associated with the air duct (3), wherein the air duct (3) is formed in at least two parts in cross-section and for this purpose has a first duct element (5) and a second duct element (6) which are held sealingly against one another by the at least one latching means (15) in such a manner that together they form the closed casing wall (4) of the air duct (3), **characterized in that** the first and second channel elements (5, 6) each have, in cross-section, a bottom wall (7, 8) and two side walls (9, 10) projecting from the bottom wall (7, 8) at a distance from one another, each of the side walls (9, 10) having, on its free end face, either a receiving recess (11, 27) or a connecting projection (12 - 14, 25, 26), **in that** the side walls (9, 10) of at least one of the channel elements (5, 6) are each formed in the shape of a fork with two connecting projections (13, 14; 25, 26) aligned at least substantially parallel to one another, the two connecting projections (13, 14; 25, 26) in each case forming between them a receiving recess (11, 27) for receiving at least one connecting projection (13, 14, 25, 26) of a side wall (9, 10) of the opposite channel element (5, 6), and **in that** at least one of the connecting projections (12) has a laterally projecting latching lug (17), and **in that** a connecting projection (14), assigned to this connecting projection (12), of the opposite channel element has a latching recess (16) which interacts with the latching lug (17) and together forms the at least one latching means (15).

2. The air duct apparatus according to claim 1, **characterized in that** the latching lug (17) and the latching recess (16) are formed or arranged on an outer side of the air duct.

3. The air duct apparatus according to any of the preceding claims, **characterized in that** at least one of the duct elements (5,6) has, in a branching area (19,24) from at least one of the side walls (10,11) into the associated connecting projections (13,14;25,26), a fluid injection internal pressure duct (20,28) extending parallel to the air duct (3).

4. The air duct apparatus according to any of the preceding claims, **characterized in that** each duct element (5,6) comprises a respective fluid injection internal pressure duct (20,28) in each of the branching areas (19,24).

5. The air duct apparatus according to any of the preceding claims, **characterized in that** at least one connecting projection (12, 25) and/or at least one receiving recess (11, 27) each has a wedge-shaped end for tight abutment against the opposite duct element (6, 5).

6. The air duct apparatus according to any of the preceding claims, **characterized in that** the first duct element (5) or the second duct element (6) is formed as a support element (2) of an instrument panel of a motor vehicle.

7. A motor vehicle having at least one air duct apparatus (1) according to any of claims 1 to 6.

## Revendications

1. Dispositif de conduit d'air (1) pour un véhicule, en particulier un véhicule automobile, comportant un conduit d'air (3) tubulaire présentant une paroi d'enveloppe (4) fermée en section transversale, et comportant au moins un moyen d'encliquetage (15) élastiquement déformable associé au conduit d'air (3), dans lequel le conduit d'air (3) est réalisé au moins en deux parties en section transversale et présente un premier élément de conduit (5) et un second élément de conduit (6) qui sont maintenus ensemble de manière étanche par l'au moins un moyen d'encliquetage (15), de telle sorte qu'ils forment conjointement la paroi d'enveloppe (4) fermée du conduit d'air (3), **caractérisé en ce que** le premier et le second élément de conduit (5, 6) présentent, en section transversale, respectivement une paroi de fond (7, 8) et deux parois latérales (9, 10) faisant saillie à distance l'une de l'autre depuis la paroi de fond (7, 8), dans lequel chacune des parois latérales (9, 10) présente, sur sa face frontale libre, soit une cavité de réception (11, 27), soit une saillie de liaison (12 - 14, 25, 26), **en ce que** les parois latérales (9, 10) d'au moins l'un des éléments de conduit (5, 6) sont respectivement réalisées sous forme de fourche comportant deux saillies de liaison (13, 14 ; 25, 26) orientées au moins sensiblement parallèlement l'une à l'autre, dans lequel les deux saillies de liaison (13, 14 ; 25, 26) respectives forment entre elles respectivement une cavité de réception (11, 27) permettant de recevoir au moins une saillie de liaison (13, 14, 25, 26) d'une paroi latérale (9, 10) de l'élément de conduit (5, 6) opposé, **et en ce qu'**au moins l'une des saillies de liaison (12) présente un ergot d'encliquetage (17) faisant saillie latéralement, **et en ce qu'**une saillie de liaison (14) de l'élément de conduit opposé associée à ladite saillie de liaison (12) présente un évidement d'encliquetage (16) coopérant avec l'ergot d'encliquetage (17), lesquels forment conjointement l'au moins un moyen d'encliquetage (15).

2. Dispositif de conduit d'air selon la revendication 1, **caractérisé en ce que** l'ergot d'encliquetage (17) et l'évidement d'encliquetage (16) sont réalisés ou disposés sur une face extérieure du conduit d'air.

3. Dispositif de conduit d'air selon l'une des revendications précédentes, **caractérisé en ce qu'**au moins l'un des éléments de conduit (5,6) présente, dans une zone de ramification (19,24) d'au moins l'une des parois latérales (10,11) dans les saillies de liaison (13,14 ; 25,26) associées, un conduit de pression interne d'injection de fluide (20,28) qui s'étend parallèlement au conduit d'air (3).

4. Dispositif de conduit d'air selon l'une des revendications précédentes, **caractérisé en ce que** chaque élément de conduit (5,6) présente, dans chacune des zones de ramification (19,24), respectivement un conduit de pression interne d'injection de fluide (20,28).

5. Dispositif de conduit d'air selon l'une des revendications précédentes, **caractérisé en ce qu'**au moins une saillie de liaison (12,25) et/ou au moins une cavité de réception (11,27) présentent respectivement une extrémité en forme de coin pour l'installation étanche sur l'élément de conduit (6,5) opposé.

6. Dispositif de conduit d'air selon l'une des revendications précédentes, **caractérisé en ce que** le premier élément de conduit (5) ou le second élément de conduit (6) est réalisé sous la forme d'un élément de support (2) d'un tableau de bord d'un véhicule automobile.

7. Véhicule automobile comportant au moins un dispositif de conduit d'air (1) selon l'une des revendications 1 à 6.
